# DEMANDE DE BREVET EUROPEEN

(11) **EP 4 382 390 A1**
(43) Date de publication de la demande: **12.06.2024**
(21) Numéro de dépôt: 23214379.2
(22) Date de dépôt: 05.12.2023
(51) Int. Cl.: B61D 17/08, B60R 13/00, B62D 31/02

(54) **CHÂSSIS POUR VÉHICULE COMPRENANT UN PANNEAU COMPOSITE AVEC FONCTION COUPE-FEU**

(30) Priorité: 06.12.2022 FR 2212835
(71) Demandeur: ALSTOM Holdings, 93400 Saint-Ouen-sur-Seine (FR)
(72) Inventeur: COMBEAU, Eric, 17600 Corme Royal (FR); KEERSBULIK, Jérémy, 17220 La Jarne (FR); DE-VILLELE, Tanguy, 31300 Toulouse (FR)
(74) Mandataire: Lavoix

(57) **Abrégé**

La présente invention concerne un châssis pour véhicule, notamment ferroviaire, comprenant un panneau composite (15) comportant :
- une couche métallique supérieure (25),
- une couche métallique intermédiaire (29),
- une âme supérieure en bois ou à base d'écorce (27) disposée entre la couche métallique supérieure (25) et la couche métallique intermédiaire (29),
- une couche métallique inférieure (33),
- une âme inférieure en bois ou à base d'écorce (31) disposée entre la couche métallique intermédiaire (29) et la couche métallique inférieure (33),
la couche métallique inférieure (33) comprenant de l'acier.

## Description

La présente invention concerne un châssis pour véhicule, notamment ferroviaire, de type multicouche.

Le châssis d'un véhicule, notamment ferroviaire, assure le maintien des différents éléments du véhicule, ainsi que des passagers situés à l'intérieur du véhicule. En cas d'incendie, le châssis doit pouvoir conserver sa structure globale afin de conserver ses fonctions mécaniques.

Par exemple, JP4234923 décrit une structure de plancher installée dans une structure de caisse pour véhicule ferroviaire comprenant un panneau composite.

Cependant, une telle structure de plancher n'est pas entièrement satisfaisante, car elle ne permet pas de conserver ses fonctions mécaniques pendant au moins 15 minutes en cas d'incendie sous le châssis.

Un but de l'invention est de proposer un châssis pour véhicule, notamment ferroviaire, présentant un panneau composite capable de conserver ses fonctions mécaniques pendant au moins 15 min en cas d'incendie.

A cet effet, l'invention a pour objet un châssis pour véhicule du type précité, comprenant un panneau composite comportant :
- une couche métallique supérieure,
- une couche métallique intermédiaire,
- une âme supérieure en bois ou à base d'écorce disposée entre la couche métallique supérieure et la couche métallique intermédiaire,
- une couche métallique inférieure,
- une âme inférieure en bois ou à base d'écorce disposée entre la couche métallique intermédiaire et la couche métallique inférieure,
la couche métallique inférieure comprenant de l'acier.

Suivant des modes de réalisation particuliers de l'invention, le châssis pour véhicule présente en outre les caractéristiques suivantes, prises isolément ou suivant toutes les combinaisons techniquement possibles :
- l'acier est un acier inoxydable ;
- l'âme supérieure en bois ou à base d'écorce est en balsa ;
- l'âme inférieure en bois ou à base d'écorce est en liège et au moins un agglomérant ;
- l'âme supérieure en bois ou à base d'écorce a une épaisseur comprise entre 20 millimètres et 100 millimètres ;
- l'âme supérieure en bois ou à base d'écorce a une densité comprise entre 50 g/cm³ et 250 g/cm³ ;
- l'âme inférieure en bois ou à base d'écorce a une épaisseur comprise entre 10 millimètres et 40 millimètres ;
- l'âme inférieure en bois ou à base d'écorce a une densité comprise entre 200 g/cm³ et 500 g/cm³ ;
- le châssis comprend en outre un cadre sur lequel est solidarisé le panneau composite et caractérisé en ce qu'il comporte, solidarisée au cadre, une butée d'arrêt disposée sous un ensemble formé par la couche métallique supérieure, l'âme supérieure en bois ou à base d'écorce et la couche métallique intermédiaire, et une butée d'arrêt sous un ensemble formé par l'âme inférieure en bois ou à base d'écorce et la couche métallique inférieure.

L'invention a également pour objet un véhicule, notamment ferroviaire, comportant un châssis selon l'invention.

L'invention sera mieux comprise à la lecture de la description qui va suivre, donnée uniquement à titre d'exemple, non limitatif, et faite en se référant aux dessins annexés sur lesquels :
[Fig 1] - la figure 1 est une vue d'une section transversale partielle d'un châssis pour véhicule comportant un panneau composite selon l'invention, et
[Fig 2] - la figure 2 est une d'une section transversale partielle du panneau composite du châssis selon l'invention.

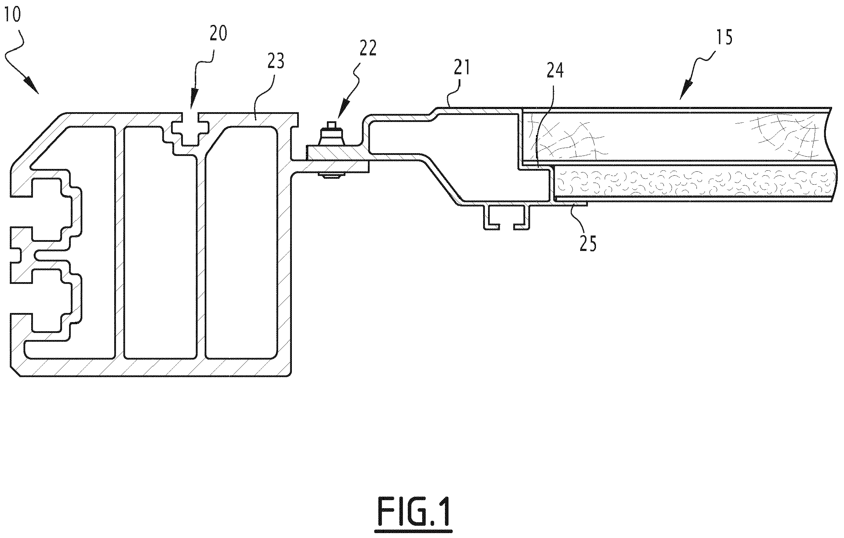

La figure 1 représente un châssis 10 pour véhicule comportant un panneau composite 15 et une structure 20 sur laquelle est solidarisée le panneau composite 15. Par exemple, le véhicule est un véhicule ferroviaire, avantageusement un véhicule de transport métropolitain. En variante, le véhicule est un véhicule de transport routier, par exemple un bus.

Le panneau 15 est bordé à sa périphérie par un cadre métallique 21 ceinturant le panneau. Le cadre 21 comporte des pièces de liaison 22 sur la structure 20 du châssis. La structure comprend deux longerons longitudinaux 23 dont seul un est représenté ici.

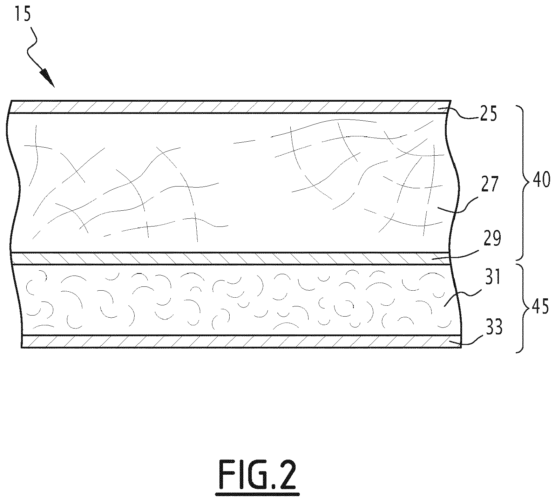

Comme visible sur la figure 2, le panneau composite 15 comporte successivement une couche métallique supérieure 25, une âme supérieure 27 en bois ou à base d'écorce, une couche métallique intermédiaire 29, une âme inférieure 31 en bois ou à base d'écorce et une couche métallique inférieure 33.

L'âme supérieure 27 est disposée entre la couche métallique supérieure 25 et la couche métallique intermédiaire 29.

L'âme inférieure 31 est disposée entre la couche métallique intermédiaire 29 et la couche métallique inférieure 33.

La couche métallique inférieure 33 est orientée vers l'extérieur du véhicule.

La couche métallique inférieure 33 est en contact avec l'environnement extérieur du véhicule.

La couche métallique supérieure 25 est en contact avec l'environnement intérieur du véhicule.

Alternativement, la couche métallique supérieure 25 est en contact avec un revêtement améliorant l'esthétique de l'intérieur du véhicule.

Les différentes couches et âmes du panneau composite 15 sont maintenues les unes aux autres par une colle polymère. Une telle colle polymère est par exemple une colle époxy dimensionnée pour garantir une bonne adhésion entre les différentes couches et assurer la tenue mécanique du panneau composite 15.

L'âme supérieure en bois ou à base d'écorce 27 est par exemple réalisée en balsa.

L'âme supérieure en bois ou à base d'écorce 27 présente une densité comprise entre 50 g/cm³ et 250 g/cm³, qui vaut avantageusement 100 g/cm³.

L'âme supérieure en bois ou à base d'écorce 27 présente en outre une épaisseur comprise entre 20 mm et 100 mm, qui vaut avantageusement sensiblement 35 mm.

L'âme inférieure en bois ou à base d'écorce 31 est réalisée en liège et au moins un agglomérant.

L'âme inférieure en bois ou à base d'écorce 31 présente une densité comprise entre 200 g/cm³ et 500 g/cm³, qui vaut avantageusement 335 g/cm³.

L'âme inférieure en bois ou à base d'écorce 31 présente en outre une épaisseur comprise entre 10 mm et 40 mm, qui vaut avantageusement sensiblement 25 mm.

La couche métallique supérieure 25 et la couche métallique intermédiaire 29 sont en aluminium anodisés laqués, avantageusement en aluminium 5754 H111.

La couche métallique supérieure 25 présente une épaisseur comprise entre 1 mm et 3 mm, qui vaut avantageusement sensiblement 1,5 mm.

La couche métallique intermédiaire 29 présente une épaisseur comprise entre 0.8 mm et 3 mm, qui vaut avantageusement sensiblement 1 mm.

Selon le mode de réalisation décrit à la figure 2, la couche métallique inférieure 33 est réalisée en acier inoxydable, avantageusement acier inoxydable 304L.

Selon un autre mode de réalisation, la couche métallique inférieure 33 comprend une couche d'acier recouverte par au moins une couche protectrice anticorrosive sur sa face opposée à l'âme 31. Cette couche protectrice anticorrosive est par exemple une peinture ou un revêtement galvanisé.

La couche métallique inférieure 33 présente une épaisseur comprise entre 0,5 mm et 1,5 mm, qui vaut avantageusement sensiblement 0,8 mm.

La couche métallique supérieure 25, l'âme supérieure en bois ou à base d'écorce 27 et la couche métallique intermédiaire 29 forment un ensemble 40.

L'âme inférieure en bois ou à base d'écorce 31 et la couche métallique inférieure 33 forment un ensemble 45.

L'ensemble 40 et l'ensemble 45 forment le panneau composite 15.

Le cadre 21 comporte un ensemble de butées d'arrêts 24 disposée sous l'ensemble 40 et un ensemble de butées d'arrêts 25 sous l'ensemble 45.

Chaque butée d'arrêt 24 est formée par un épaulement du cadre 21 formant une marche se prolongeant sous l'ensemble 40 formant saillie par rapport à l'ensemble 45. Ainsi, chaque butée d'arrêt 24 est apte à maintenir l'ensemble 40 du panneau composite 15 en cas de désolidarisation de l'ensemble 45 du panneau composite 15.

Chaque butée d'arrêt 25 est formée par une patte venue de matière avec le cadre 21 se prolongeant sous le panneau composite 15 et en contact avec celui-ci. Ainsi, l'extrémité de chaque patte s'étend au droit du panneau composite 15 et est propre à le maintenir en cas de désolidarisation du panneau composite 15 ou d'une partie de celui-ci.

Lors du fonctionnement normal du véhicule, le panneau 15 assure la tenue structurelle du châssis soumis à des efforts statiques et dynamiques. Les épaisseurs des différentes couches sont définies suivant le besoin du matériel roulant.

En cas d'incendie sous le châssis 10, l'ensemble 45 se dégrade et consomme une partie de l'énergie produite par l'incendie, ce qui permet à l'ensemble 40 de conserver son intégrité, et en particulier ses propriétés mécaniques. L'ensemble 40 est dimensionné pour assurer la tenue mécanique soumis au chargement statique uniquement (passagers + équipements), le temps de l'évacuation des passagers.

Ainsi, lorsque la couche métallique inférieure 33 est soumise à une température équivalente à la courbe de montée en température normalisée EN 1363-1, le panneau composite 15 est apte à conserver une température moyenne inférieure ou égale à 139 °C au niveau de la couche supérieure métallique 25, pendant une durée d'au moins 15 minutes, avantageusement d'au moins 30 minutes.

En cas d'incendie sous le châssis 10, la couche métallique inférieure 33 peut également être amenée à se désolidariser du panneau composite 15. Les butées d'arrêt 25 solidarisées au cadre 21 et disposées sous l'ensemble 45 permettent de retenir la couche métallique inférieure 33 désolidarisée. Les butées d'arrêt 24 solidarisées au cadre 21 et disposées sous l'ensemble 40 permettent d'assurer le maintien en position de l'ensemble 40.

Grâce au châssis 10 décrit ci-dessus, les requis de résistance au feu supérieurs à 15 minutes, avantageusement supérieurs à 30 minutes, sont respectés. En cas d'incendie, le panneau composite 15 ne présente pas de fissure traversante ni de perforation. Ainsi, l'intérieur de la voiture n'est pas atteint par des flammes ou des fumées traversant le panneau composite 15. Les passagers sont isolés de la chaleur dégagée par l'incendie et peuvent être évacués. De plus, aucun objet ne tombe sur la voie.

## Revendications

1. Châssis (10) pour véhicule, notamment ferroviaire, comprenant un panneau composite (15) comportant :
- une couche métallique supérieure (25),
- une couche métallique intermédiaire (29),
- une âme supérieure en bois ou à base d'écorce (27) disposée entre la couche métallique supérieure (25) et la couche métallique intermédiaire (29),
- une couche métallique inférieure (33),
- une âme inférieure en bois ou à base d'écorce (31) disposée entre la
couche métallique intermédiaire (29) et la couche métallique inférieure (33), la couche métallique inférieure (33) comprenant de l'acier.

2. Châssis selon la revendication 1, dans lequel l'acier est un acier inoxydable.

3. Châssis selon l'une quelconque des revendications précédentes, dans lequel l'âme supérieure en bois ou à base d'écorce (27) est en balsa.

4. Châssis selon l'une quelconque des revendications précédentes, dans lequel l'âme inférieure en bois ou à base d'écorce (31) est en liège et au moins un agglomérant.

5. Châssis selon l'une quelconque des revendications précédentes, dans lequel l'âme supérieure en bois ou à base d'écorce (27) a une épaisseur comprise entre 20 millimètres et 100 millimètres.

6. Châssis selon l'une quelconque des revendications précédentes, dans lequel l'âme supérieure en bois ou à base d'écorce (27) a une densité comprise entre 50 g/cm³ et 250 g/cm³.

7. Châssis selon l'une quelconque des revendications précédentes, dans lequel l'âme inférieure en bois ou à base d'écorce (31) a une épaisseur comprise entre 10 millimètres et 40 millimètres.

8. Châssis selon l'une quelconque des revendications précédentes, dans lequel l'âme inférieure en bois ou à base d'écorce (31) a une densité comprise entre 200 g/cm³ et 500 g/cm³.

9. Châssis selon l'une quelconque des revendications précédentes, comprenant en outre un cadre (21) sur lequel est solidarisé le panneau composite (15) et **caractérisé en ce qu'**il comporte, solidarisée au cadre, une butée d'arrêt (24) disposée sous un ensemble (40) formé par la couche métallique supérieure (25), l'âme supérieure en bois ou à base d'écorce (27) et la couche métallique intermédiaire (29), et une butée d'arrêt (25) sous un ensemble (45) formé par l'âme inférieure en bois ou à base d'écorce (31) et la couche métallique inférieure (33).

10. Véhicule, notamment ferroviaire, comportant un châssis selon l'une quelconque des revendications 1 à 9.
